(19) Europäisches Patentamt
European Patent Office
Office européen des brevets

(11) **EP 2 402 206 A2**

(12) **EUROPEAN PATENT APPLICATION**

(43) Date of publication:
**04.01.2012 Bulletin 2012/01**

(51) Int Cl.:
***B60L 11/18*** *(2006.01)*

(21) Application number: **11005197.6**

(22) Date of filing: **27.06.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Inui, Shinya**<br>  **Osaka 570-8677 (JP)**<br>• **Tada, Makoto**<br>  **Osaka 570-8677 (JP)**<br>• **Hayahida, Atsushi**<br>  **Osaka 570-8677 (JP)** |
| (30) Priority: **30.06.2010 JP 2010150567** | (74) Representative: **Hertz, Oliver**<br>**v. Bezold & Partner**<br>**Patentanwälte**<br>**Akademiestrasse 7**<br>**80799 München (DE)** |
| (71) Applicant: **Sanyo Electric Co., Ltd.**<br>**Moriguchi-shi**<br>**Osaka 570-8677 (JP)** | |
| (72) Inventors:<br>• **Maeda, Reizo**<br>  **Osaka 570-8677 (JP)** | |

(54) **SOC correctable power supply device for hybrid car**

(57)     A power supply device of a hybrid car includes a driving battery 1 and a battery management system 2. The driving battery 1 can supply electric power to an electric motor 13 for driving the car. The battery management system 2 detects SOC of the driving battery 1, and transmits the detected SOC to the car. The battery management system 2 stores maximum SOC and minimum SOC relating to transmission of SOC to the car. When the detected SOC of the battery falls within a range between the maximum SOC and the minimum SOC, the detected SOC of the battery is transmitted to the car. When the detected SOC is not lower than the maximum SOC, the maximum SOC is transmitted to the car. When the detected SOC of the battery is not higher than the minimum SOC, the minimum SOC is transmitted to the car.

FIG. 3

EP 2 402 206 A2

**Description**

BACKGROUND OF THE INVENTION

1. Field of the Invention

The present invention relates to a power supply device that is installed on a hybrid car and supplies electric power to an electric motor of the hybrid car, and in particular to a power supply device that is installed on a hybrid car and transmits SOC of a battery to the car.

2. Description of the Related Art

A power supply device installed on a hybrid car detects SOC of battery, and transmits the detected SOC to the car. SOC of a battery refers to a rate of a capacity that can be discharged from the battery relative to the fully-charged capacity. In the case where a battery has a fully-charged capacity of 6 Ah, when a capacity of the battery is 3 Ah that can be discharged from the battery until the battery is completely discharged, the battery has SOC of 50%. SOC of the battery is 100% when the battery is fully charged. SOC of the battery is 0% when the battery is completely discharged.
The car controls the charging/discharging operation of the battery based on SOC transmitted from the power supply device (See Laid-Open Patent Publication No. JP 2003-47108 A).
The power supply device of a hybrid car disclosed in this Publication controls the charging/discharging operation of the battery so that SOC of the battery falls within a predetermined range. If SOC of the battery becomes large, discharging operation is allowed while charging operation is limited so that SOC can be reduced. On the other hand, if SOC of the battery becomes small, discharging operation is limited while charging operation is allowed so that SOC can be increased.
The hybrid car controls electric devices such as air-conditioner installed on the car based on SOC of the driving battery. For example, if SOC of the battery becomes small, the air-conditioner is stopped. On the other hand, if SOC of the battery becomes large, the air-conditioner is allowed to operate. The reason is to prevent that the battery is over-discharged due to air-conditioner operation. In the case where the hybrid car is brought in a stop, its engine is stopped. However, even in this case, the power supply device is controlled so that, if SOC of the battery becomes small, the engine is started to charge the battery. Also, if SOC of the battery is increased to a predetermined value, the engine is stopped.
The power supply device detects SOC based on the accumulated values of current in charging/discharging operation of the battery, and the voltage of the battery. SOC is calculated by adding accumulated values of charging current to the previous SOC and by subtracting accumulated values of discharging current from the previous SOC. In the case where SOC is detected based on the accumulated values of current, the detected SOC will have an error, which increases with time. Accordingly, SOC is detected in consideration of the voltage of the battery in addition to the accumulated values of current. The voltage of the battery increases as SOC increases, and decreases as SOC decreases. However, the voltage of the battery is not specified only by SOC. The voltage of the battery varies depending on other various parameters including whether the battery is charged or discharged, and temperature. For this reason, SOC cannot be accurately detected only based on voltage.
For this reason, the power supply device of the hybrid car detects SOC based on both the accumulated value of current, and voltage. In detection of SOC based on voltage, SOC can be more accurately detected as SOC of the battery gets closer to 100% when the battery is charged, and as SOC of the battery gets closer to 0% when the battery is discharged. Accordingly, in the case where the weight of voltage is increased in SOC detection as SOC of the battery gets closer to 100%, or as SOC of the battery gets closer to 0%, SOC can be accurately detected. Although SOC of the battery is accurately detected based on voltage in the ranges where SOC is closer to 100% or 0%, there is time difference between the voltage increase and SOC increase of the battery. As discussed above, SOC of the battery detected by the power supply device includes an error caused by various reasons.
Since conventional power supply devices of a hybrid car transmit detected SOC values of a battery as they are, SOC sharply increases and decreases. Accordingly, electric devices such as air-conditioner are repeatedly switched ON/OFF, or its engine is repeatedly started and stopped, which in turn causes drivers' discomfort.
The present invention has been developed for solving the aforementioned problem. It is an important object of the present invention to provide a power supply device for a hybrid car that can suppress that correction of SOC transmitted to the car causes ON/OFF switching repetition of electric devices such as air-conditioner installed on the car and start/stop repetition of an engine of the car whereby providing a comfortable driver environment.

SUMMARY OF THE INVENTION

A power supply device of a hybrid car according to the present invention includes a driving battery 1 and a battery management system 2. The driving battery 1 can supply electric power to an electric motor 13 for driving the car. The battery management system 2 detects SOC of the driving battery 1, and transmits the detected SOC to the car. The battery management system 2 stores maximum SOC and minimum SOC relating to transmission of SOC of the battery to the car. When the detected SOC of the battery falls within a range between the maximum SOC and the minimum SOC, the detected SOC of the battery is transmitted to the car. When the detected SOC of the battery is not lower than the maximum SOC, the maximum SOC is transmitted to the car. When the detected SOC of the battery is not higher than the minimum SOC, the minimum SOC is transmitted to the car.

The thus-constructed power supply device of a hybrid car has a feature that it is possible to suppress that correction of SOC transmitted to the car causes ON/OFF switching repetition of electric devices such as air-conditioner installed on the car and start/stop repetition of an engine of the car whereby providing a comfortable driver environment.

In the power supply device of a hybrid car according to the present invention, the maximum SOC stored by the battery management system 2 can be set at a value falling within a range of 65% to 75%, and the minimum SOC stored by the battery management system 2 can be set at a value falling within a range of 25% to 35%.

According to the thus-constructed power supply device, it is possible to prevent that the battery is over-charged/over-discharged, and additionally to suppress ON/OFF switching repetition of electric devices such as air-conditioner installed on the car and start/stop repetition of an engine of the car whereby providing a comfortable driver environment.

In the power supply device of a hybrid car according to the present invention, the battery management system 2 can store a maximum variation rate of SOC relating to transmission of variation rate of SOC of the battery to the car. In addition, when the variation rate of the detected SOC of the battery is higher than the maximum variation rate, the variation rate of SOC to be transmitted to the car can be limited to the maximum variation rate so that the maximum variation rate is transmitted to the car in transmission of variation rate of SOC.

According to the thus-constructed power supply device, it is possible to correcting the error of calculated SOC, and additionally prevent ON/OFF repetition of electric devices and an engine of the car.

In the power supply device of a hybrid car according to the present invention, the maximum variation rate in SOC decrease stored by the battery management system 2 can be set at a value smaller than the SOC decrease rate where the driving battery 1 is discharged at a predetermined maximum current.

The thus-constructed power supply device has a feature that, even if a detection error occurs so that the detected SOC too much sharply varies, a stable SOC value can be transmitted to the car.

In the power supply device of a hybrid car according to the present invention, the maximum variation rate in SOC increase stored by the battery management system 2 can be set at a value smaller than the SOC increase rate where the driving battery 1 is charged at a predetermined maximum current.

The thus-constructed power supply device has a feature that, even if a detection error occurs so that the detected SOC too much sharply varies, a stable SOC value can be transmitted to the car.

In the power supply device of a hybrid car according to the present invention, the battery management system 2 can store different maximum variation rate values corresponding to SOC decrease and SOC increase.

According to the thus-constructed power supply device, if the detected SOC too much sharply increases and decreases, it is possible to correct the detected SOC so that a stable SOC value can be transmitted to the car both in the SOC increase and decrease cases.

The above and further objects of the present invention as well as the features thereof will become more apparent from the following detailed description to be made in conjunction with the accompanying drawings.

BRIEF DESCRIPTION OF THE DRAWINGS

Fig. 1 is a block diagram of a power supply device of a hybrid car according to an embodiment of the present invention;

Fig. 2 is a graph showing the ratio between weight 1 and weight 2;

Fig. 3 is a graph showing variation where SOC of a driving battery detected by a battery management system varies into a range exceeding maximum SOC, and varies too much sharply;

Fig. 4 is a graph showing variation where SOC of a driving battery detected by a battery management system varies into a range lower than minimum SOC, and varies too much sharply; and

Fig. 5 is a block diagram a power storage type power supply device to which the present invention is applied.

DETAILED DESCRIPTION OF THE EMBODIMENT(S)

The following description will describe embodiments according to the present invention with reference to the drawings.

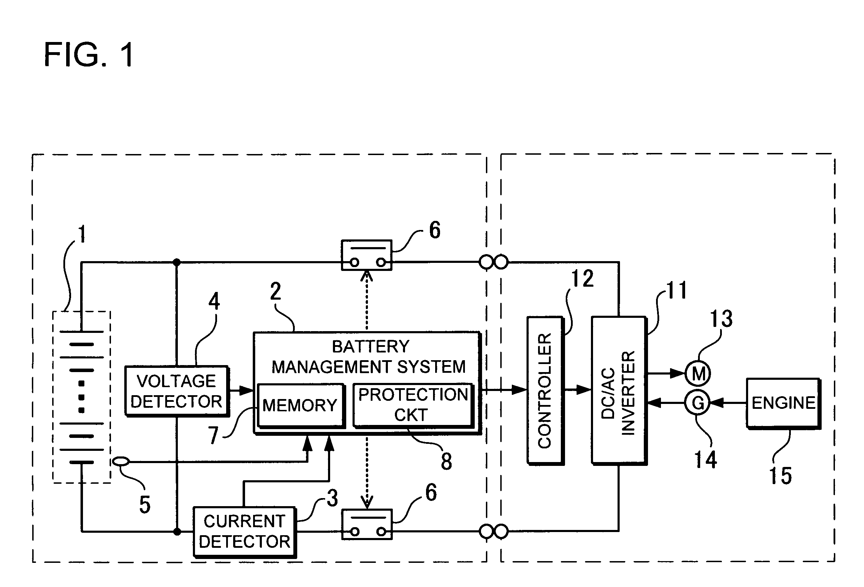

A power supply device of a hybrid car shown in Fig. 1 includes a driving battery 1 and a battery management system 2. The driving battery 1 can supply electric power to an electric motor 13 for driving the car. The battery management system 2 detects SOC of the driving battery 1, and transmits the detected SOC to the car.

The car includes a control circuit 12 that controls a DC/AC inverter 11 based on signals transmitted from the battery management system 2. The DC/AC inverter 11 is connected to the electric motor 13 for driving the car, and an electric generator 14 for charging the driving battery 1. The electric generator 14 can charge the driving battery 1 when driven by an engine 15, and can charge the driving battery 1 when rotated by regenerative braking in car braking.

The control circuit 12 controls the DC/AC inverter 11. Thus, the electric motor 13 and the electric generator 14 are controlled so that SOC of the driving battery 1 is held in a predetermined range, for example, SOC is held in a range of 50% ± 20%. According to the control of the control circuit 12, when the driving battery 1 is charged so that the SOC of the driving battery 1 increases to 70%, the charging operation is stopped while only the discharging operation is allowed. On the other hand, the driving battery 1 is discharged so the SOC of the driving battery 1 decreases to 30%, discharging operation is stopped while only charging operation is allowed. That is, the control circuit 12 controls the electric motor 13 and the electric generator 14 through the DC/AC inverter 11 so that SOC of the driving battery 1 is held in the range of 50% ± 20%.

The control circuit 12 controls the electric motor 13 and the electric generator 14 based on signals provided from an accelerator pedal and a brake pedal while holding SOC in the predetermine range. For example, when the accelerator pedal is pressed down to accelerate the car, the electric motor 13 is supplied with electric power so that the car is accelerated by the power outputs of both the electric motor 13 and the engine 15. Also, in the case where the car travels at a low speed, the car can be driven only by the electric motor 13 with the engine 15 being stopped. In this case, if SOC of the driving battery 1 decreases, the engine 15 is started so that the car will be driven by both the engine 15 and the electric motor 13 with the driving battery 1 being charged. On the other hand, when the brake pedal is pressed down in car braking, the electric generator 14 is rotated by wheels so that the driving battery 1 is charged. That is, the driving battery 1 can be charged by regenerative braking. When SOC of the driving battery 1 increases to 70%, the engine 15 is stopped, which in turn stops charging operation of the driving battery 1.

The battery management system 2 detects SOC of the driving battery 1 to be charged/discharged, in order to charge/discharge the driving battery 1 with SOC being held in the predetermined range. SOC is detected based on the accumulated value of charging/discharging current, and voltage. The power supply device detects SOC based on signals from a current detecting circuit 3, a voltage detecting circuit 4 and a temperature detecting circuit 5. The current detecting circuit 3 detects current flowing the driving battery 1. The voltage detecting circuit 4 detects the voltage of the driving battery 1. The temperature detecting circuit 5 detects the temperature of the driving battery 1.

The battery management system 2 calculates SOC by adding accumulated values of charging current of the driving battery 1 to the previous SOC and by subtracting accumulated values of discharging current of the driving battery 1 from the previous SOC. In addition, SOC is calculated based on the voltage of the driving battery 1. The battery management system 2 calculates SOC according to the following formula based on the accumulation-based SOC calculated based on the accumulated values, and the voltage-based SOC detected based on the voltage.

$$SOC = (weight\ 1) \times (accumulation\text{-}based\ SOC) + (weight\ 2) \times (voltage\text{-}based\ SOC)$$

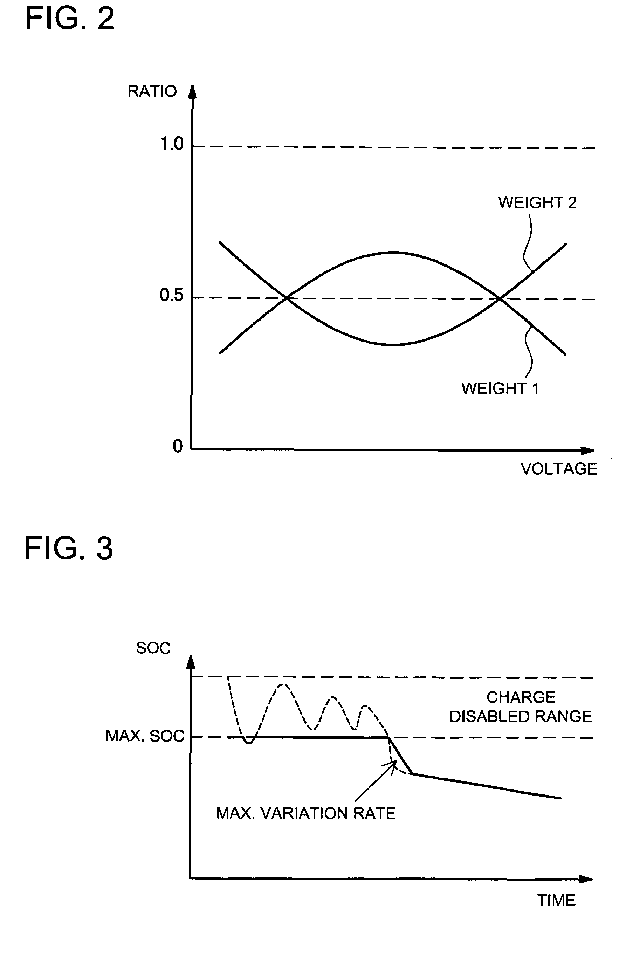

where (weight 1) + (weight 2) = 1
In addition, the weight 1 and the weight 2 are changed in accordance with the voltage of the battery. Fig. 2 shows the change in the ratio between weight 1 and weight 2 in accordance with the voltage of the battery. A memory 7 of the battery management system 2 stores the change in the ratio between weight 1 and weight 2 in accordance with the voltage.

In addition, the battery management system 2 corrects SOC based on the temperature of the battery to more accurately detect SOC. SOC of the driving battery 1 can be more accurately detected by correcting the charging efficiency and discharging efficiency, or the voltage of the battery based on the temperature of the battery.

In car traveling, the driving battery 1 is charged/discharged so that SOC varies. The battery management system 2 detects SOC of the driving battery 1, which varies, and transmits the detected SOC to the control circuit of the car. The battery management system 2 does not transmit the detected SOC of the driving battery 1 as it is to the control circuit of the car. The battery management system 2 stores maximum SOC and minimum SOC in transmission of SOC of the battery to the car. When the detected SOC of the battery falls within a range between the maximum SOC and the minimum SOC, the battery management system 2 transmits the detected SOC of the battery to the control circuit of the car. When the detected SOC of the battery is not lower than the maximum SOC, the battery management system 2 transmits the maximum SOC to the control circuit of the car. When the detected SOC of the battery is not higher than the minimum SOC, the battery management system 2 transmits the minimum SOC is transmitted to the control circuit of the car.

In addition, the battery management system 2 stores a maximum variation rate relating to transmission of variation rate of SOC of the battery to the car. When the variation rate of the detected SOC of the battery is higher than the maximum variation rate, the variation rate of SOC to be transmitted to the control circuit of the car is corrected and limited to the maximum variation rate so that the maximum variation rate is transmitted to the control circuit of the car in transmission of variation rate of SOC. A SOC variation rate per second has a maximum limitation up to this maximum variation rate, which is set at a value smaller than the SOC decrease rate where the driving battery 1 is discharged at a predetermined maximum current.

In order to protect the driving battery, the maximum available current flowing through the driving battery 1 is previously determined. Thus, the driving battery 1 is not discharged at a current higher than the maximum current in any conditions. For example, if the driving battery 1 has a rated capacity of 6 Ah, when the driving battery 1 is discharged at 200 A for 1 second, the SOC decrease is calculated at 0.926%. In the case the maximum available current flowing through the driving battery 1 is 200 A, the driving battery 1 is discharged at a current not larger than 200 A. For this reason, the variation rate of SOC does not exceed 0.926% unless SOC is corrected. In the case where the maximum variation rate of SOC is set at a value not larger than 0.926%, a stable SOC variation rates can be transmitted to the control circuit of the car. If the maximum variation rate is set at a too small value, accurate SOC cannot be transmitted to the control circuit of the car. From this viewpoint, the stored maximum variation rate is set at a value not less than 70%, preferably not less than 80%, and more preferably not less than 90% of the SOC decrease where the driving battery is discharged at the maximum available current.

Also, in the case where the driving battery 1 has different maximum available current values in discharging operation and charging operation, the maximum variation rate is switched between the SOC decrease case where the driving battery 1 is discharged and the SOC increase where the driving battery 1 is charged. For example, in the case where the maximum available charging and discharging current values of the driving battery 1 are 50 A and 200 A, respectively, the maximum SOC increase rate in charging operation is 0.23%. In this driving battery 1, in the case where the maximum variation rate of SOC when SOC increases is set at a value not larger than 0.23%, a stable SOC variation rates can be transmitted to the control circuit of the car. Also, if the maximum variation rate is set at a too small value, accurate SOC cannot be transmitted to the control circuit of the car. From this viewpoint, the stored maximum variation rate is set at a value not less than 70%, preferably not less than 80%, and more preferably not less than 90% of the SOC increase where the driving battery is charged at the maximum available current.

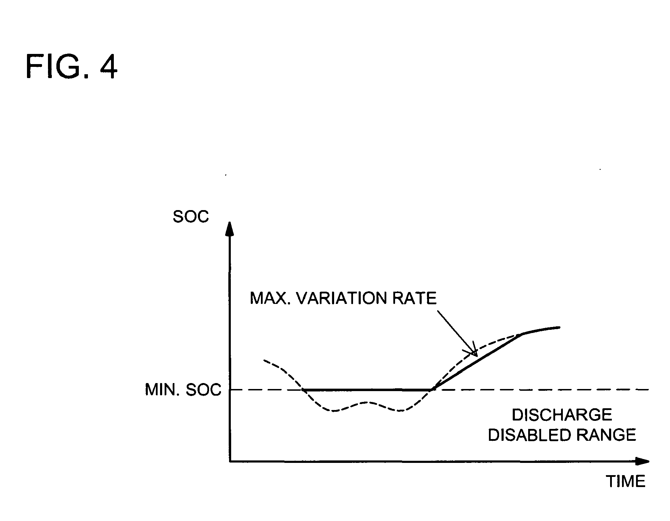

In Figs. 3 and 4, the dashed lines indicate SOC of the driving battery 1 detected by the battery management system 2, and the thick lines indicate SOC to be transmitted to the control circuit of the car. Fig. 3 is a graph showing variation where SOC of the driving battery 1 detected by the battery management system 2 varies into a range exceeding the maximum SOC, and the detected SOC varies too much sharply. In the case where the detected SOC varies shown by the dashed lines in Fig. 3, the control circuit of the car is provided with to-be-transmitted SOC shown by the thick line in Fig. 3. That is, when the detected SOC exceeds the maximum SOC, the maximum SOC is transmitted to the control circuit of the car. When the variation rate of the detected SOC exceeds the maximum variation rate, to-be-transmitted SOC is changed from the detected SOC correspondingly to the maximum variation rate.

Fig. 4 is a graph showing variation where SOC of the driving battery 1 detected by the battery management system 2 varies into a range lower than the minimum SOC, and the detected SOC varies too much sharply. In the case where the detected SOC varies shown by the dashed lines in Fig. 4, the control circuit of the car is provided with to-be-transmitted SOC shown by the thick line in Fig. 4. That is, when the detected SOC is lower than the minimum SOC, the minimum SOC is transmitted to the control circuit of the car. When the variation rate of the detected SOC exceeds the maximum variation rate, to-be-transmitted SOC is changed from the detected SOC correspondingly to the maximum variation rate.

Since the battery management system 2 transmits the thus-limited SOC to the control circuit of the car, the control circuit of the car cannot determine whether the driving battery 1 is charged/discharged to abnormal states. In order to improve the safety of the thus-constructed power supply device, contactors 6 are connected to the positive and negative output sides of the driving battery 1 of the power supply device. The contactors 6 are controlled by a protection circuit 8 of the battery management system 2. If the driving battery 1 is brought into an over-charged state, the protection circuit 8 of the battery management system 2 opens the contactors 6 and prevents that the driving battery 1 is over-charged. On the other hand, if SOC of the driving battery 1 reaches zero so that the driving battery 1 cannot be discharged, the protection circuit 8 of the battery management system 2 also opens the contactors 6 and forcedly stops discharging operation of the driving battery 1. (Power Storage Type Power Supply Device)

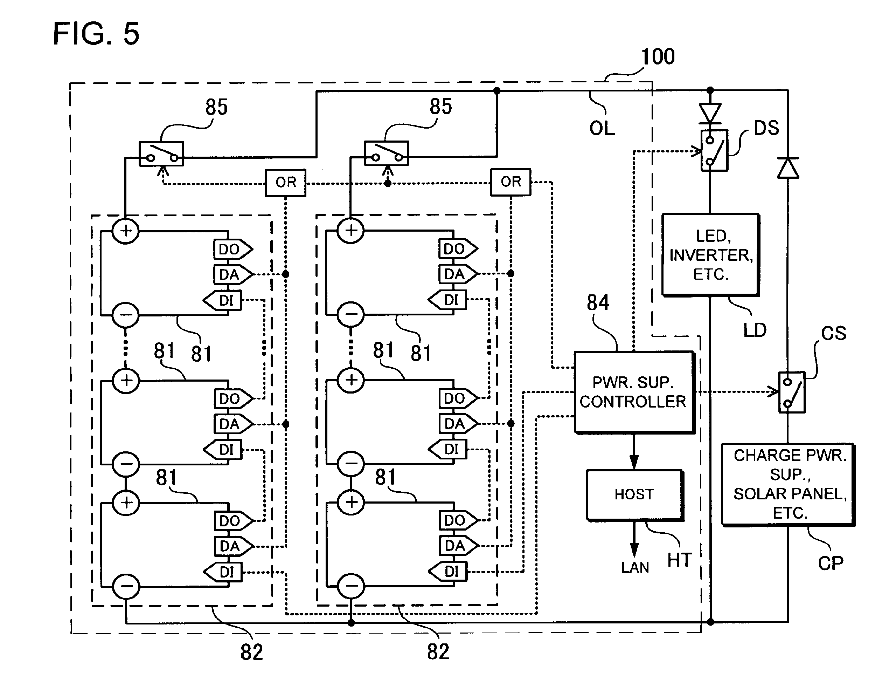

Fig. 5 shows a power supply device which can be used not only as power supply of mobile unit such as vehicle but also as stationary power storage. This power supply device can be used as, for example, examples of stationary power storage devices can be provided by an electric power system for home use or plant use that is charged with solar electric power or with midnight electric power and is discharged when necessary, a power supply for street lights that is charged with solar electric power during the daytime and is discharged during the nighttime, or a backup power supply for signal lights that drives signal lights in the event of a power failure. Fig. 5 shows a circuit diagram according to this embodiment. This illustrated power supply device 100 includes battery units 82 each of which includes a plurality of battery packs 81 that are connected to each other. In each of battery packs 81, a plurality of battery cells are connected to each other in serial and/or in parallel. The battery packs 81 are controlled by a power supply controller 84. In this power supply device 100, after the battery units 82 are charged by a charging power supply CP, the power supply device 100 drives a load LD. The power supply device 100 has a charging mode and a discharging mode. The Load LD and the charging power supply CP are connected to the power supply device 100 through a discharging switch DS and a charging switch CS, respectively. The discharging switch DS and the charging operation switch CS are turned ON/OFF by the power supply controller 84 of the power supply device 100. In the charging mode, the power supply controller 84 turns charging operation switch CS ON, and turns the discharging switch DS OFF so that the power supply device 100 can be charged by the charging power supply CP. When the charging operation is completed so that the battery units are fully charged or when the battery units are charged to a capacity not lower than a predetermined value, if the load LD requests electric power, the power supply controller 84 turns the charging operation switch CS OFF, and turns the discharging switch DS ON. Thus, operation is switched from the charging mode to the discharging mode so that the power supply device 100 can be discharged to supply power to the load LD. In addition, if necessary, the charging operation switch CS may be turned ON, while the discharging switch DS may be turned ON so that the load LD can be supplied with electric power while the power supply device 100 can be charged.

The load LD driven by the power supply device 100 is connected to the power supply device 100 through the discharging switch DS. In the discharging mode of the power supply device 100, the power supply controller 84 turns the discharging switch DS ON so that the power supply device 100 is connected to the load LD. Thus, the load LD is driven with electric power from the power supply device 100. Switching elements such as FET can be used as the discharging switch DS. The discharging switch DS is turned ON/OFF by the power supply controller 84 of the power supply device 100. The power supply controller 84 includes a communication interface for communicating with an external device. In the power supply device according to the embodiment shown in Fig. 5, the power supply controller is connected to a host device HT based on existing communications protocols such as UART and RS-232C. Also, the power supply device may include a user interface that allows users to operate the electric power system if necessary. Each of the battery packs 81 includes signal terminals and power supply terminals. The signal terminals include a pack input/output terminal DI, a pack abnormality output terminal DA, and a pack connection terminal DO. The pack input/output terminal DI serves as a terminal for providing/receiving signals to/from other battery packs and the power supply controller 84. The pack connection terminal DO serves as a terminal for providing/receiving signals to/from other battery packs as slave packs. The pack abnormality output terminal DA serves as a terminal for providing an abnormality signal of the battery pack to the outside. Also, the power supply terminal is a terminal for connecting one of the battery packs 81 to another battery pack in series or in parallel. In addition, the battery units 82 are connected to an output line OL through parallel connection switched 85, and are connected in parallel to each other.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

**Claims**

**1.**   A power supply device for a hybrid car comprising:

a driving battery (1) that can supply electric power to an electric motor (13) for driving the car; and
a battery management system (2) that detects SOC of said driving battery (1) and transmits the detected SOC to the car,
**characterized in that**
said battery management system (2) stores maximum SOC and minimum SOC relating to transmission of SOC of the battery to the car, and
when the detected SOC of the battery falls within a range between the maximum SOC and the minimum SOC, the detected SOC of the battery is transmitted to the car, and wherein when the detected SOC of the battery is not lower than the maximum SOC, the maximum SOC is transmitted to the car, and when the detected SOC of the battery is not higher than the minimum SOC, the minimum SOC is transmitted to the car.

2. The power supply device for a hybrid car according to claim 1, wherein the maximum SOC stored by said battery management system (2) is set at a value falling within a range of 65% to 75%.

3. The power supply device for a hybrid car according to claim 1, wherein the minimum SOC stored by said battery management system (2) is set at a value falling within a range of 25% to 35%.

4. The power supply device for a hybrid car according to any of claims 1 to 3, wherein said battery management system (2) stores a maximum variation rate of SOC relating to transmission of variation rate of SOC of the battery to the car, wherein when the variation rate of the detected SOC of the battery is higher than the maximum variation rate, the variation rate of SOC to be transmitted to the car is limited to the maximum variation rate so that the maximum variation rate is transmitted to the car in transmission of variation rate of SOC.

5. The power supply device for a hybrid car according to claim 4, wherein the maximum variation rate in SOC decrease stored by said battery management system (2) is set at a value smaller than the SOC decrease rate where the driving battery (1) is discharged at a predetermined maximum current.

6. The power supply device for a hybrid car according to claim 5, wherein the stored maximum variation rate is set at a value not smaller than 70% of the SOC decrease rate where the driving battery (1) is discharged at the predetermined maximum current.

7. The power supply device for a hybrid car according to claim 4, wherein the maximum variation rate in SOC increase stored by said battery management system (2) is set at a value smaller than the SOC increase rate where the driving battery (1) is charged at a predetermined maximum current.

8. The power supply device for a hybrid car according to claim 7, wherein the stored maximum variation rate is set at a value not smaller than 70% of the SOC increase rate where the driving battery (1) is charged at the predetermined maximum current.

9. The power supply device for a hybrid car according to claim 5 or 6, wherein said battery management system (2) stores different maximum variation rate values corresponding to SOC decrease and SOC increase.

10. The power supply device for a hybrid car according to claim 1, wherein said battery management system (2) calculates SOC based on accumulation-based SOC, which is calculated based on accumulated values of charging/discharging current of the driving battery, and voltage-based SOC, which is detected based on the voltage of the driving battery, according to the following formula

$$SOC = (weight\ 1) \times (accumulation\text{-}based\ SOC) + (weight\ 2) \times (voltage\text{-}based\ SOC)$$

where (weight 1) + (weight 2) = 1.

11. The power supply device for a hybrid car according to claim 1, wherein the battery management system (2) corrects SOC based on the temperature of the battery.

12. The power supply device for a hybrid car according to claim 1 further comprising contactors (6) that are connected to the positive and negative output sides of the driving battery 1, wherein the battery management system (2) includes a protection circuit (8) that controls the contactors 6, and wherein when the driving battery (1) is brought into an over-charged state, the protection circuit (8) of the battery management system (2) opens the contactors (6) and prevents that the driving battery (1) is over-charged, and when the driving battery (1) cannot be discharged, the protection circuit (8) of the battery management system (2) opens the contactors (6) and forcedly stops discharging operation of the driving battery (1).

# FIG. 1

# FIG. 2

RATIO

1.0

WEIGHT 2

0.5

WEIGHT 1

0

VOLTAGE

# FIG. 3

SOC

CHARGE
DISABLED RANGE

MAX. SOC

MAX. VARIATION RATE

TIME

# FIG. 4

# FIG. 5

EP 2 402 206 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003047108 A